# EUROPEAN PATENT APPLICATION

(11) **EP 4 760 884 A1**
(43) Date of publication of application: **17.06.2026**
(21) Application number: 25212634.7
(22) Date of filing: 31.10.2025
(51) Int. Cl.: H01M 10/658, H01M 50/204, H01M 50/383

(54) **BATTERY PACK**

(30) Priority: 11.12.2024 JP 2024217097
(71) Applicant: TOYOTA JIDOSHA KABUSHIKI KAISHA, Toyota-shi, Aichi-ken 471-8571 (JP)
(72) Inventor: MATSUO, Kensuke, Toyota-shi, 471-8571 (JP)
(74) Representative: TBK

(57) **Abstract**

A battery pack including: a case that surrounds cells; and a thermal insulation material positioned between the case and the cells, the thermal insulation material covering at least an ejection region where ejected materials are ejected from the cells, wherein a first adhesive adheres a first region of the thermal insulation material positioned at the ejection region to the case, a second adhesive adheres a second region of the thermal insulation material excluding the first region to the case, and thermal resistance of the first adhesive is lower than the thermal resistance of the second adhesive.

## Description

### BACKGROUND

### Technical Field

This disclosure relates to a battery pack.

### Related Art

Japanese Patent Application Laid-open (JP-A) No. 2023-046977, and JP-A No. 2023-175722, disclose descriptions for mitigating thermal propagation between battery cells in a battery pack.

Here, in for example lithium battery cells (hereinafter, "cells"), hot ejected materials can be released from the cells, due to abnormal heat generation inside. If the ejected materials stick to a battery case (hereinafter, "case") that covers the outside of the battery cells, a coating on the surface of the case may ignite due to heat from the ejected materials that spreads via the case. As a solution to this, for example, in order to provide between the cells and the case a thermal insulation material with a thickness sufficient enough to be able to inhibit ignition, space is increased inside the case, which can hinder the miniaturization of the battery pack.

### SUMMARY

The present disclosure provides a battery pack with which thermal insulation performance may be improved without hindering the miniaturization of the battery pack.

A first aspect of the disclosure is a battery pack including: a case that surrounds cells; and a thermal insulation material positioned between the case and the cells, the thermal insulation material covering at least an ejection region where ejected materials are ejected from the cells, wherein a first adhesive adheres a first region of the thermal insulation material positioned at the ejection region to the case, a second adhesive adheres a second region of the thermal insulation material excluding the first region to the case, and thermal resistance of the first adhesive is lower than the thermal resistance of the second adhesive.

In the battery pack according to the first aspect of the disclosure, heat from the ejected materials causes the first adhesive itself to separate from the case or causes the first region of the thermal insulation material to separate from the first adhesive, so the heat from the ejected materials is less likely to spread to the coating of the case, and ignition caused by heat may be inhibited.

In a second aspect of the disclosure, in the first aspect, the first region may be configured to be separated from the case after the ejected materials have been ejected.

In the battery pack according to the second aspect of the disclosure, an air layer functions as a thermal insulation layer, so the heat from the ejected materials is even more less likely to spread to the coating of the case, and ignition caused by heat may be inhibited even more.

In a third aspect of the disclosure, in the first aspect, the first region may be provided at a position corresponding to an ejection opening from which the ejected materials are ejected, when the case is seen in a top view.

In the battery pack according to the third aspect of the disclosure, the thermal insulation material in the first region to which the ejected materials from the cells tends to stick more easily separates from the case, and the heat is less likely to spread to the case. Accordingly, ignition caused by heat may be inhibited.

As described above, with the battery pack according to the disclosure, thermal insulation performance may be improved without hindering the miniaturization of the battery pack.

### BRIEF DESCRIPTION OF THE DRAWINGS

An exemplary embodiment will be described in detail based on the following figures, wherein:
FIG. 1 is a sectional view of a battery pack 1 according to the exemplary embodiment of the disclosure;
FIG. 2 is an enlarged view of the part denoted by reference sign A in FIG. 1;
FIG. 3 is a drawing for describing the separation of a part of a thermal insulation material 4 from a case 3 when ejected materials 100 sticks thereto;
FIG. 4 is a drawing for describing the separation of a part of the thermal insulation material 4 from the case 3 when the ejected materials 100 stick thereto; and
FIG. 5 is a drawing for describing the separation of a part of the thermal insulation material 4 from the case 3 when the ejected materials 100 stick thereto.

### DETAILED DESCRIPTION

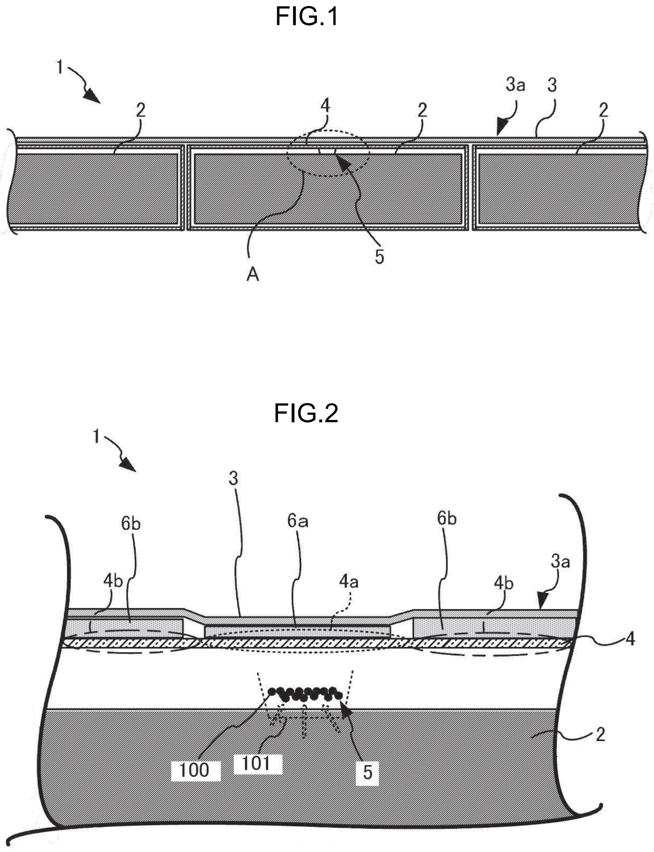

A battery pack will be described below with reference to the drawings. FIG. 1 and FIG. 2 are sectional views of a battery pack 1 according to an exemplary embodiment of the disclosure. FIG. 2 shows an enlargement of the part denoted by reference sign A in FIG. 1.

The battery pack 1 may include a plurality of cells 2, a case 3 that surrounds the plurality of cells 2 and whose surface is coated with a coating 3a, and a thermal insulation material 4.

The coating 3a around the case 3 is, for example, a cationic electrodeposition coating.

The thermal insulation material 4 may be positioned between the case 3 and the cells 2 and cover at least an ejection region 5 where ejected materials 100 are ejected from the cells 2. For example, the thermal insulation material 4 may include a first region 4a of the thermal insulation material 4 positioned on the upper side of the ejection region 5 and a second region 4b of the thermal insulation material 4 excluding the first region 4a. The first region 4a of the thermal insulation material 4 may be provided in a position corresponding to an ejection opening 101 from which the ejected materials 100 are ejected when the case 3 is seen in a top view.

The thermal resistance of a first adhesive 6a that adheres the first region 4a of the thermal insulation material 4 to the case 3 is lower than the thermal resistance of a second adhesive 6b that adheres the second region 4b of the thermal insulation material 4 to the case 3. For example, the first adhesive 6a and the second adhesive 6b may be configured by a liquid material or a tape material. Specifically, the first adhesive 6a may be configured by a heat-resistant material that is deformed by the temperature of the ejected materials 100, and the second adhesive 6b may be configured by a heat-resistant material that is not deformed by the temperature of the ejected materials 100, i.e., a heat-resistant material that can withstand temperatures exceeding the temperature of the ejected materials 100. Note that, examples of the materials configuring the first adhesive 6a and the second adhesive 6b include acrylic resins, epoxy resins, and urethane resins.

The width of the first region 4a of the thermal insulation material 4 may, for example, be an optional width from 0.5 times to 4.0 times the open width of the ejection opening 101. When the width of the first region 4a of the thermal insulation material 4 is wider, the region in which the thermal insulation material 4 separates from the case 3 becomes wider and the volume of an air layer between the thermal insulation material 4 and the case 3 that functions as a thermal insulation layer can be increased as described below.

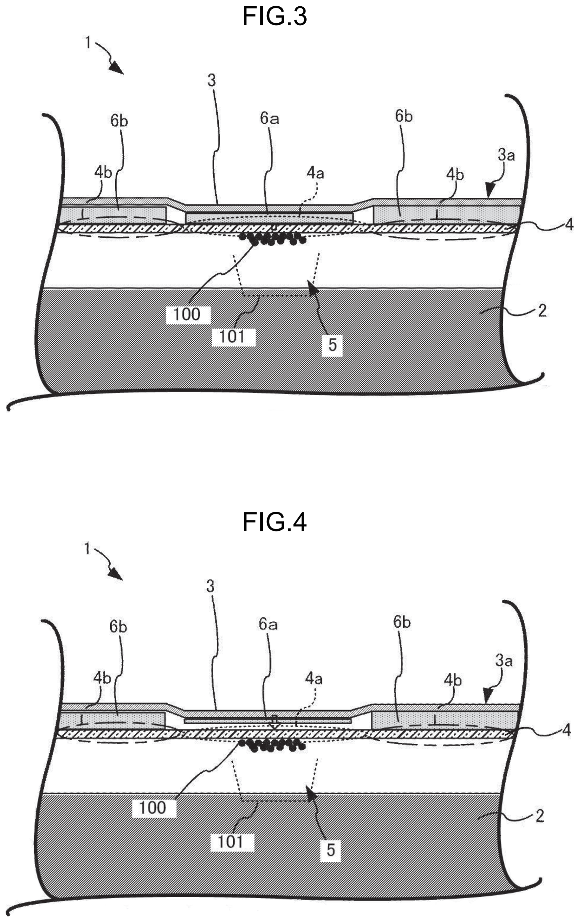

Next, the separation of a part of the thermal insulation material 4 from the case 3 when the ejected materials 100 sticks thereto, will be described with reference to FIG. 3 to FIG. 5.

As shown in FIG. 3, when the ejected materials 100 ejected from the ejection opening 101 sticks to a part (namely, the first region 4a) of the thermal insulation material 4 positioned in the ejection region 5, heat from the ejected materials 100 spreads via the thermal insulation material 4 to the first adhesive 6a. Since the first adhesive 6a includes heat-resistant material that is deformed by the temperature of the ejected materials 100 as mentioned above, the heat from the ejected materials 100 causes the first adhesive 6a itself to separate from the case 3 or causes the first region 4a of the thermal insulation material 4 to separate from the first adhesive 6a as shown in FIG. 4.

However, since the second adhesive 6b includes a heat-resistant material that is not deformed by the temperature of the ejected materials 100, i.e., a heat-resistant material that can withstand temperatures exceeding the temperature of the ejected materials 100, the second adhesive 6b does not separate from the case 3 or the second region 4b of the thermal insulation material 4 does not separate from the second adhesive 6b.

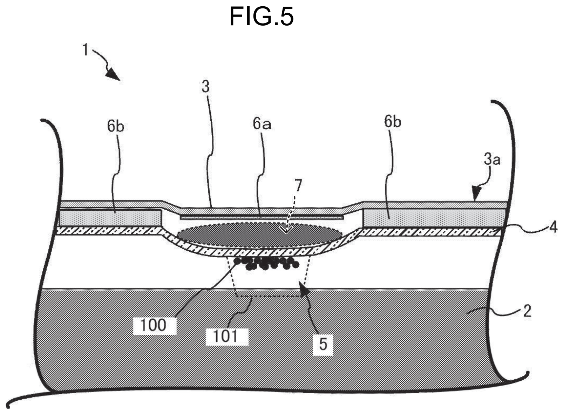

Because of this, an air layer 7 is formed between a partial region of the thermal insulation material 4 and the case 3 as shown in FIG. 5. Namely, thermal insulation is formed between the first region 4a of the thermal insulation material 4 to which the ejected materials 100 tend to stick and the case 3 or between the first adhesive 6a and the case 3. The first region 4a after the ejected materials 100 have been ejected is separated from the case 3.

In this way, in the battery pack according to the exemplary embodiment of the disclosure, the thermal resistance of the first adhesive 6a that adheres the first region 4a of the thermal insulation material 4 to the case 3 is lower than the thermal resistance of the second adhesive 6b that adheres the second region 4b of the thermal insulation material 4 excluding the first region 4a to the case 3, and the air layer 7 is formed between the first region 4a after the ejected materials 100 have been ejected and the case 3.

Due to the above configuration, the heat from the ejected materials 100 causes the first adhesive 6a itself to separate from the case 3 or causes the first region 4a of the thermal insulation material 4 to separate from the first adhesive 6a, so the heat from the ejected materials 100 is less likely to spread to the coating 3a of the case 3, and ignition caused by heat may be inhibited.

Furthermore, the air layer 7 functions as a thermal insulation layer, so the heat from the ejected materials 100 is even more less likely to spread to the coating 3a of the case 3, and ignition caused by heat may be inhibited even more.

Furthermore, the air layer 7 improves thermal insulation performance, so the limited amount of air inside the case 3 may be utilized to improve thermal insulation performance.

Furthermore, because thermal insulation performance improves, it is not necessary to add a space for providing a thermal insulation material with a large thickness dimension, so thermal insulation performance may be improved while maintaining the shape and size of the existing case 3 and the shape and size of the cells 2. Furthermore, thermal insulation performance may be improved without hindering the miniaturization of the battery pack 1.

Furthermore, materials for a thin thermal insulation material having excellent thermal resistance are expensive and rare, so when such a thermal insulation material is used, the manufacturing cost of the battery pack 1 may rise, leading to a supply shortage. By contrast, in the battery pack according to the exemplary embodiment of the disclosure, the general-purpose thermal insulation material 4 can be utilized, so ignition caused by heat can be inhibited at the same time that an increase in the manufacturing cost of the battery pack 1 is inhibited.

## Claims

1. A battery pack (1) comprising:
a case (3) that surrounds cells (2); and
a thermal insulation material (4) positioned between the case (3) and the cells (2), the thermal insulation material (4) covers at least an ejection region (5) where ejected materials (100) are ejected from the cells (2),
wherein a first adhesive (6a) adheres a first region (4a) of the thermal insulation material (4) positioned at the ejection region (5) to the case (3), a second adhesive (6b) adheres a second region (4b) of the thermal insulation material (4) excluding the first region (4a) to the case, and thermal resistance of the first adhesive (6a) is lower than the thermal resistance of the second adhesive (6b).

2. The battery pack of claim 1, wherein the first region (4a) is configured to be separated from the case (3) after the ejected materials (100) have been ejected.

3. The battery pack of claim 1, wherein the first region (4a) is provided at a position corresponding to an ejection opening (101) from which the ejected materials (100) are ejected, when the case (3) is seen in a top view.
